# EUROPEAN PATENT APPLICATION

(11) **EP 1 662 397 A2**
(43) Date of publication of application: **31.05.2006**
(21) Application number: 05251092.2
(22) Date of filing: 24.02.2005
(51) Int. Cl.: G06F 11/27

(54) **Processor, its error analytical method and program**

(30) Priority: 26.11.2004 JP 2004341600
(71) Applicant: FUJITSU LIMITED, Kawasaki-shi, Kanagawa 211-8588 (JP)
(72) Inventor: Maruyama, Masaharu c/o Fujitsu Limited, Kawasaki-shi, Kanagawa 211-8588 (JP)
(74) Representative: Stebbing, Timothy Charles

(57) **Abstract**

A plurality of error holding latches built in CPU cores 14-1, 14-2 formed on an LSI chip 10 are connected and constituted into a line of error collecting scan chain 48, and the interior of the error collecting scan chain is divided into CPU latch groups 56-1, 56-2 corresponding to the CPU cores 14-1, 14-2, and mask circuits 58-1, 58-2 are provided at the test operating time, which allow the latch content of the error holding latch group 56-1, 56-2 corresponding to a degenerated CPU core 14-1, 14-2 in the interior of two CPU cores to be masked, and the error collecting scan chain 48 is scanned out at the error occurrence time, thereby collecting error information. A latch group 56-3 and mask circuit 58-3 corresponding to a secondary cache 16 may be provided also.

## Description

This application is based on prior application No.JP 2004-341600, filed November 26, 2004, in Japan, from which it claims priority.

The present invention relates to a processor comprising a plurality of CPU cores on a chip, its error analytical method and a program, and in particular, it relates to a processor for scanning out a scan chain which connects a plurality of error holding latches built into a plurality of CPU cores and collecting and analyzing error information, its error analytical method and program.

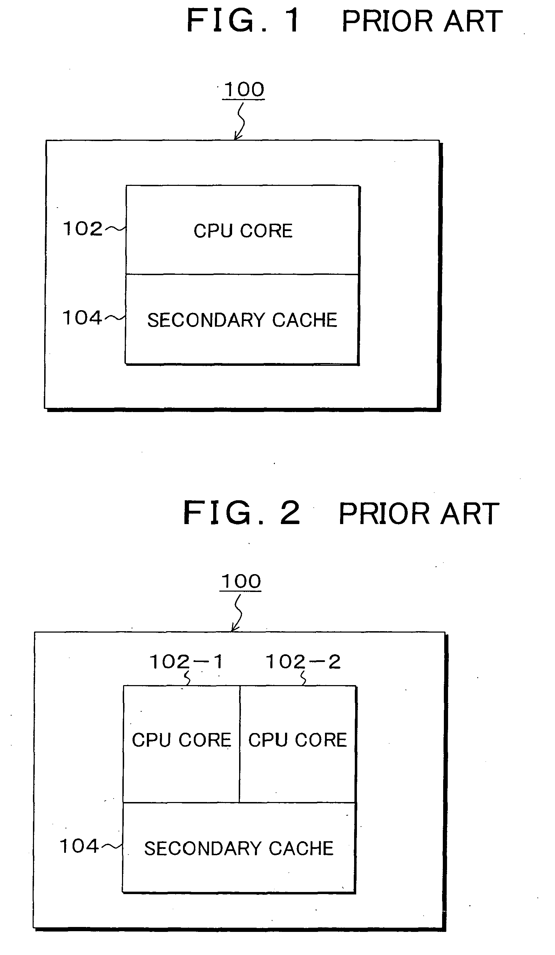

In general, in a conventional processor, as shown in FIG. 1, a piece of CPU core 102 is mounted on an LSI chip 100 together with, for example, a secondary cache 104, although this makes the upgrading of a single CPU difficult. Hence, to upgrade the whole system, as shown in FIG. 2, an attempt to upgrade the whole system has been made by mounting a plurality of CPU cores, for example, two pieces of CPU cores 102-1 and 102-2, on the LSI chip 100, thereby allowing the LSI chip to operate as a chip multi processor (CMP: Chip Multi Processor).

According to such a chip multi processor, the LSI having an enhanced degree of integration is effectively used, and further, an upgrade for every LSI chip is realized. Particularly, in a case where the chip multi processor is constructed with a pin compatibility of the LSI chip maintained as it is, there is no change in the whole system, and by replacing only the LSI chip, which is mounted with the multi chip processor, a sharp upgrade can be realized, and therefore, great hopes are entertained of it in view of the cost performance.

Now, even in a case where the LSI chip is constructed to be the chip multi processor, the collection and analysis of an error by using the scan chain of an error holding latch, which is used in a conventional chip single processor, is required.

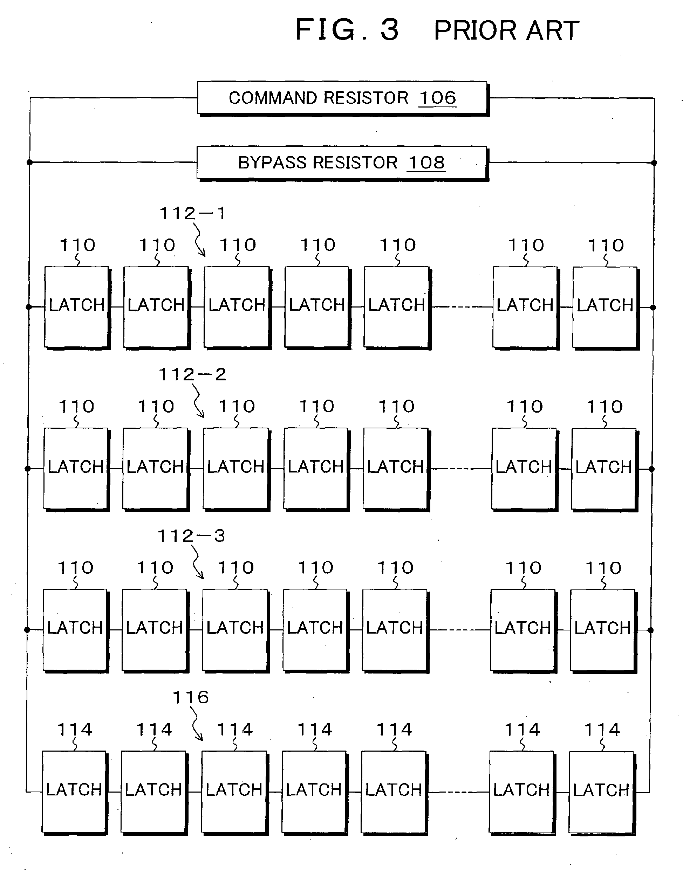

FIG. 3 shows a JTAG (Joint European Test Action Group) circuit for the error collection in the chip single processor of FIG. 1. The JTAG is provided by an IEEE1149.1, and is a method of performing an input/output of test data so as to operate in order all external input/output pins of the LSI.

The JTAG circuit with the chip single processor of FIG. 1 taken as an object comprises: a command resistor 106; a bypass resistor 108; general control scan chains 112-1 to 112-3 constituted by connected general control latches 110; and an error collecting scan chain 116 constituted by connected error holding latches 114.

That is, an error information collecting circuit comprising the JTAG circuit of FIG. 3 expands a boundary scan function so that the collection analysis of an error can be performed even at the time of system operation. It partially constructs general control scan chains 112-1 to 112-3 by allotting a general control latch 110 in the interior of the chip to a command resistor number usable by a user, to partially construct the general control scan chains 112-1 to 112-3, thereby realizing a scanning-in and a scanning-out for a latch group in a chain by designation of the general control scan chains 112-1 to 112-3 by the command resistor 106.

As one of the scan chains designatable by the command resistor 106, an error collecting scan chain 116 constituted by the connected error holding latches 114 is allotted as a scan chain to allow the scan chain to hold factors which have caused various errors.

When an error occurs, the error collecting scan chain 116 is scanned out, and error information is collected by an external error analytical instrument, and a bit showing the error occurrence within that information is extracted, and the most extreme (original) source of the error occurrence is sought out, and adequate automatic degeneration and part replacement instructions are issued by a firmware program.

In the error analysis, the processing of searching for the most original (upstream) source of the error occurrence is realized by writing a dependency relation in a database. To be specific, when some errors occur, an error capable of propagation is written, and when a plurality of error factors exist, by comparing them to the database, an attempt is made to search out a still more upstream error factor (i.e. to get as close to the original error as possible).
[Patent Document 1] Japanese Patent Application Laid-Open No. 2002-169787

However, in a case where error information is collected by providing a JTAG circuit for the chip multi processor shown in FIG. 2, when the JTAG circuit shown in FIG. 3 is provided for each of the two CPU cores 102-1 and 102-2 located on the LSI chip 100, the number of pins for the JTAG is doubled, and further, there arises a problem as to how the latches of the general portion such as the secondary cache 104 are to be allotted for the scan chain constituted by the latches of the CPU cores 102-1 and 102-2, and a method of mounting two JTAG circuits on the CPU cores 102-1 and 102-2 is not theoretically and efficiently convenient.

Further, the chip multiple processor is intended to improve the system performance by being interchangable with the conventional chip single processor, and therefore, requires a pin compatible with the conventional chip single processor, but, according to the technique of mounting the JTAG circuit two times, there arises a problem that this pin compatibility is not possible. The pin compatibility may be performed not on a LSI level, but on a card module level.

Further, in a case where the chip multi processor degenerates either of the CPU cores 102-1 and 102-2 because of a production yield ratio, so is degenerated to the condition that it is used as a chip single processor, it requires a pin compatible with the conventional chip single processor, but according to the technique of mounting the JTAG circuit two times, there is a problem that, even in this case, the pin compatibility ends up collapsing (is not possible).

According to the present invention, there are provided a processor of a chip multiple constitution, its analytical method and a program, which realize error information collection to expand a boundary scan without impairing the pin compatability with the chip single processor.

According to a first aspect, there is provided a processor, comprising:
a plurality of CPU cores formed on a piece (region) of chip;
a scan chain circuit (error collecting scan chain) constituted (formed) by connecting a plurality of error holding latches provided in the plurality of CPU cores into a line of scan chain;
a plurality of mask circuits for dividing (an interior of) the scan chain into error holding latch groups (CPU latch groups) corresponding to the plurality of CPU cores and for allowing latch content of the error holding latch group corresponding to a degenerated CPU core within the plurality of CPU cores to be masked at a test operation time; and
a scan control circuit (test access port controller) for scanning out the scan chain circuit at an error occurrence time so as to output and collect error information.

Here, the scan control circuit scans out the error information based on a designation of the scan chain by a command resistor.

Further, the processor may also include a secondary cache formed on the chip, and in this case, the scan chain circuit is constituted by connecting the plurality of error holding latches provided in the plurality of CPU cores and a plurality of error holding latches provided in the secondary cache into the line of scan chain,
wherein a (cache) mask circuit is also provided for an error holding latch group (containing the plurality of error holding latches) corresponding to the secondary cache in the scan chain, and allows the latch content of the error holding latch group corresponding to a degenerate portion within the secondary cache to be masked at the test operating time.

Further, in an embodiment of the processor, in the scan chain circuit, the plurality of error holding latches provided in the plurality of CPU cores are divided into error levels (at the error information collecting time) and are connected into a (separate) line of scan chain for each error level,
wherein the plurality of mask circuits are provided for every error holding latch group corresponding to the plurality of CPU cores in the scan chains which are divided into error levels, and allow the latch content of the error holding latch group of each error level corresponding to a degenerated CPU core within the plurality of CPU cores to be masked.

For example, the plurality of error holding latches are divided into a high level error and a low level error, and a scan chain and at least one mask circuit are provided for each of the two error levels.

Further, each error holding latch may comprise a data input terminal, a reset input terminal, a clock terminal, a data output terminal, a shift input terminal, a shift output terminal, and a shift clock terminal, wherein the mask circuit is operable to prohibit a clock input to the clock terminal by the input of a core separating signal, and at the same time, to fix-input a reset signal to the reset terminal so as to mask the latch content.

Further, each error holding latch may comprise a data input terminal, a reset input terminal, a clock terminal, a data output terminal, a shift input terminal, a shift output terminal and a shift clock terminal, and the mask circuit may be operable to prohibit the data input for the data input terminal by the input of a core separating signal, so that the latch content may be masked.

A second aspect of the present invention provides an error analytical method for the processor, which forms a plurality of CPU cores on a piece of chip. This error analytical method of the processor is characterized by comprising:
a scan chain forming (constituting) step of connecting a plurality of error holding latches provided in a plurality of CPU cores into a line of scan chain;
a masking step of dividing (separating) the scan chain into error holding latch groups corresponding to the plurality of CPU cores and allowing the latch content of an error holding latch group corresponding to a degenerated CPU core within the plurality of CPU cores to be masked at a test operating time; and
an error information collecting step of scanning out the scan chain at an error occurrence time and collecting error information.

A third aspect of the present invention provides a program executable by a computer, which constitutes an error analytical instrument of the processor forming a plurality of CPU cores on a piece of chip. The program is characterized by causing the computer to execute:
a scan chain forming step of connecting a plurality of error holding latches provided in a plurality of CPU cores into a line of scan chain;
a masking step of dividing the interior of the scan chain into error holding latch groups (containing the plurality of error holding latches) corresponding to the plurality of CPU cores and allowing the latch content of an error holding latch group corresponding to a degenerated CPU core within the plurality of CPU cores to be masked at a test operating time; and
an error information collecting step of scanning out the scan chain at an error occurrence time and collecting error information.

The details of the error analytical method and program according to the present invention are basically the same as the case of the processor according to the present invention.

According to the above aspects and embodiments, even when a processor is formed on an LSI chip in which a plurality of CPU cores are formed, by connecting and constituting a line of scan chain for the error holding latches within a plurality of CPU cores so as to perform a scanning-out at the error occurrence time, the pin configuration compatible with the conventional chip single processor can be maintained even when an error collecting function by the JTAG is mounted, and by the replacement of the processor only, an upgrade of the whole system can be achieved without changing the system, and moreover, the error analysis of the plurality of CPU cores can be performed with the same resolution as conventionally.

If a portion of the plurality of CPU cores is separated due to degeneration, the mask circuit provided in the portion of the error collecting scan chain corresponding to the degenerated CPU core is allowed to be operated by a CPU core separating signal, so that the error holding latch of the degenerated portion is masked so as not to become a bit 1 indicating an error content, and even when the latch of the degenerated portion is contained in the error collecting scan chain, the bit of the generated portion is all taken as a normal bit by the masking process, and there is no particular processing required such as removing the error of the degenerated portion for the error information collected by performing the scanning-out of the scan chain, and the conventional error analysis can be applied as it is.

Further, in the cases where the CPU core is degenerated and used and where it is not degenerated but used, when a scan length of the scan chain for error collection is changed by using a bypass resistor, though a system change for the scanning-out at the error occurrence time is usually required, in the present case, since the scan length is not changed for both of the cases where the CPU core is degenerated and used and where it is not degenerated but used, there is no need to change the system for collecting and analyzing the error information by the scanning-out.

The above and other features and advantages of the present invention will become more apparent from the following detailed description with reference to the drawings, in which:
FIG. 1 is an explanatory drawing of a conventional processor mounted with a single CPU core;
FIG. 2 is an explanatory drawing of a conventional chip multi processor mounted with two sets of the CPU core;
FIG. 3 is a circuit block diagram of a conventional error collecting scan chain with the processor of FIG. 1 as an object;
FIG. 4 is an explanatory drawing showing the embodiment of a LSI chip mounted with a processor of the present invention together with a host;
FIGS. 5A and 5B are circuit block diagrams of an error collecting scan chain with an internal circuit of FIG. 4 taken as an object;
FIG. 6 is an explanatory drawing of an error holding latch in the internal circuit of FIG. 4;
FIG. 7 is an explanatory drawing of a resistor file provided in a CPU of FIG. 4;
FIG. 8 is an explanatory drawing of the resister file in the ordinary use time;
FIG. 9 is an explanatory drawing of a constitution of a scan chain and a scanning-out at the test time;
FIG. 10 is a circuit block diagram of the embodiment of the error holding latch and a shift circuit used for the error collecting scan chain of FIGS. 5A and 5B;
FIG. 11 is a circuit block diagram of another embodiment of the error holding resister and the shift circuit used for an error collecting scan chain of FIGS. 5A and 5B;
FIG. 12 is a flowchart of an error information collecting process by host of FIG. 4;
FIGS. 13A and 13B are circuit block diagrams of the embodiment constituting the error collecting scan chain by corresponding to two CPUs of FIG. 4; and
FIGS. 14A and 14B are circuit block diagrams of the embodiment constituting the error collecting scan chain of CPU by being divided into error levels of FIG. 4.

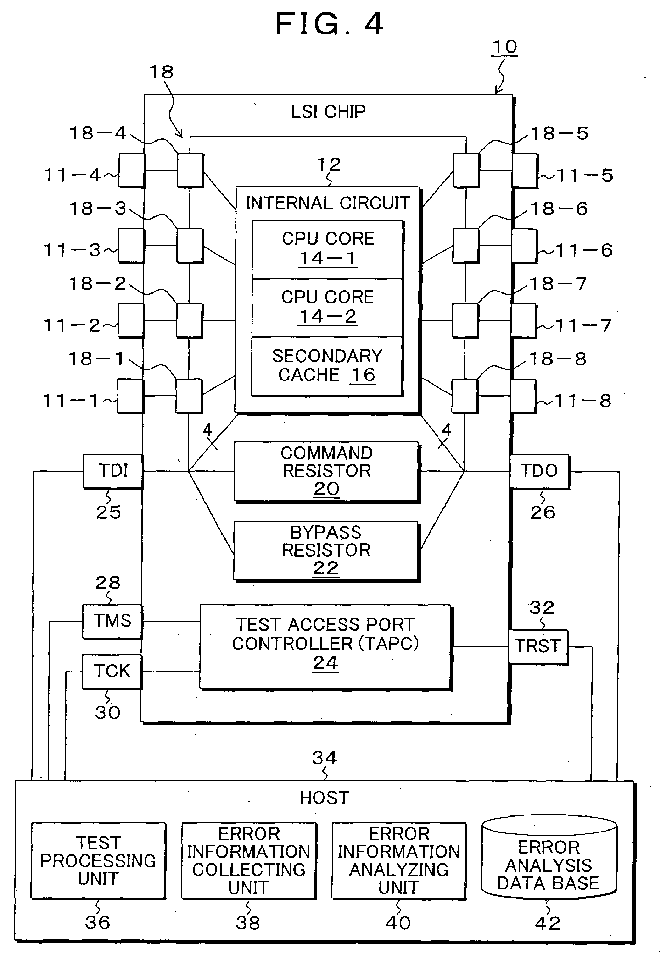

FIG. 4 is an explanatory drawing to show an embodiment of an LIS chip provided with a chip multi processor CMP embodying the present invention together with a host performing a test and an error analysis. In FIG. 4, the LSI chip 10 is provided with an internal circuit 12, and the internal circuit 12 is provided with CPU cores 14-1 and 14-2 and a secondary cache 16, thereby constituting a multi processor.

The LSI chip 10 is provided with pins 11-1 to 11-8 for subjecting the internal circuit 12 to an external connection, and the pins 11-1 to 11-8 are connected to the internal circuit 12. Although the pins 11-1 to 11-8 are shown as comprising eight pins for ease of explanation, an actual LIS chip 10 may be provided with more than that number of pins.

This LSI chip has a boundary scan test function corresponding to a JTAG by an IEEE 1149.1. A circuit unit corresponding to the JTAG in the LSI chip 10 is constituted by a boundary scan resistor 18, a command resistor 20, a bypass resistor 22, and a test access port controller (TAPC) 24.

Further, as the pins for the boundary scan test by the JTAG, a test data input pin (TD1 pin) 25, a test data output pin (TD0 pin) 26, a test mode select pin (TMS pin) 28, a test lock pin (TCK pin) 30, and a test reset pin (TRST pin) 32 are provided.

The boundary scan resistor 18 connects latches 18-1 to 18-8, provided between connection lines with the internal circuit 12 and the pins 11-1 to 11-8, into a chained line (daisy chain) so as to be connected between the test data input pin 25 and the test data output pin 26, and the boundary scan resister 18 operates as a shift resistor constituted by the latches 18-1 to 18-8.

By inputting adequate data to the latches 18-1 to 18-8 of the boundary scan resistor 18, data can be outputted from any output pin of the corresponding pins 11-1 to 11-8, and a state of the input pin can be monitored.

The command resistor 20 reads the number of the command resistor and decodes it, and can allow the internal circuit 12 to perform various functions. Further, the command resistor 20 is allotted with a command resistor number usable by a user, and by allotting this command resistor number to the scan chain connecting a plurality of latches provided in the internal circuit 12 into a line, a specific scan chain is designated so that the scanning-in or the scanning-out can be performed.

In the present embodiment, as to be clarified in the following explanation, a specific command resistor number usable by the user is allotted to the error collecting scan chain which is constituted by connecting the error holding latches provided in the internal circuit 12 to a line of scan chain in the command resistor 20, and the error information of the internal circuit 12 can be scanned out and collected by error information collection instructions from the outside.

The bypass resistor 22 provides a route for by-passing data inputted from the test data input pin 25 to the test data output pin 26 in the shortest possible route. As for how to use this bypass resistor 22, when a plurality of circuits are mounted in the internal circuit 12 of the LSI chip 10, since the boundary scan resistor 18 connects the latches 18-1 to 18-8 as a line of chain for a plurality of circuits, the latch portion of the boundary scan resistor 18 of a circuit portion requiring no test is used when making a bypass and the like.

The test access port controller 24 constitutes a state machine, which controls each resistor by a signal from the test mode selector pin 28 and a signal from the test clock pin 30.

Here, the signals for each pin for use of the JTAG will be described as follows. The test data input signal for the data input pin 25 is a signal which serial-inputs a command and data to the internal circuit 12 as a test object, and is sampled by a rising edge of the test clock for the test clock pin 30.

The test data output signal from the test data output pin 26 is a signal which serial-outputs data from the internal circuit 12 as a test object, and a change of this output value is performed by a falling edge of the test clock signal for the test clock pin 30. The test clock pin 30 supplies a clock to the internal circuit 12 which becomes a test object, and becomes an exclusive input capable of being used independently of the system clock peculiar to the internal circuit 12.

The signal for the test mode select pin 28 is a signal for controlling a test operation, and is sampled by a rising edge of the test clock, and this signal is decoded by the test access port controller 24.

The signal for the test reset pin 32 is a negative logic signal, which asynchronously initializes the test access port controller 24, and is used as an option.

A signal line from each of five pins of the JTAG aiming at the boundary scan test which is mounted on the LSI chip 10 is connected to a host 34, which executes a test operation, an error collection at the time of error occurrence, and an error analysis by the instruction from the host 34. The host 34 is provided with a test processing unit 36, an error information collecting unit 38, an error information analyzing unit 40, and an error analyzing data base 42.

The test processing unit 36 executes a preset test processing with the internal circuit 12 of the LSI chip 10 as a target. The error information collecting unit 38, when an error occurs at the time of the test operation of the internal circuit 12, designates the scanning-out operation of the error collecting scan chain, to be clarified by the following explanation by the output of the command resister number pre-allocated to the command resister 20. Then, by the scanning-out operation of the error collecting scan chain, the bit information held in each error holding latch which constitutes the chain is collected as error information.

The error information analyzing unit 40 extracts a bit in which an error occurs from the error information collected by the error information collecting unit 38, and searches for a factor which is the most upstream source of the error occurrence with reference to the error analyzing data base 42, and performs an adequate automatic degeneration processing and instructs the replacement of parts or the like.

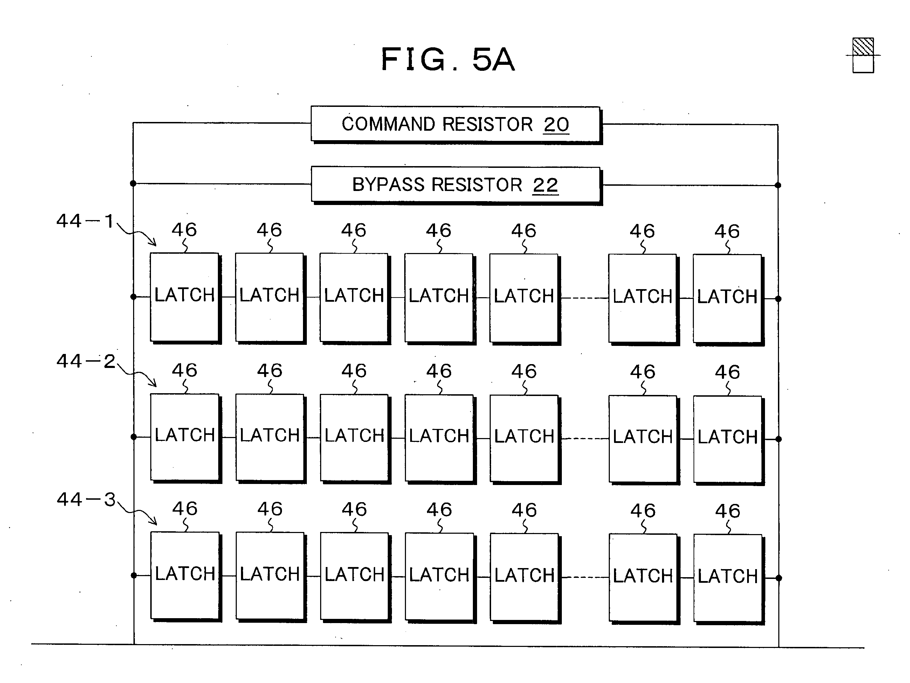

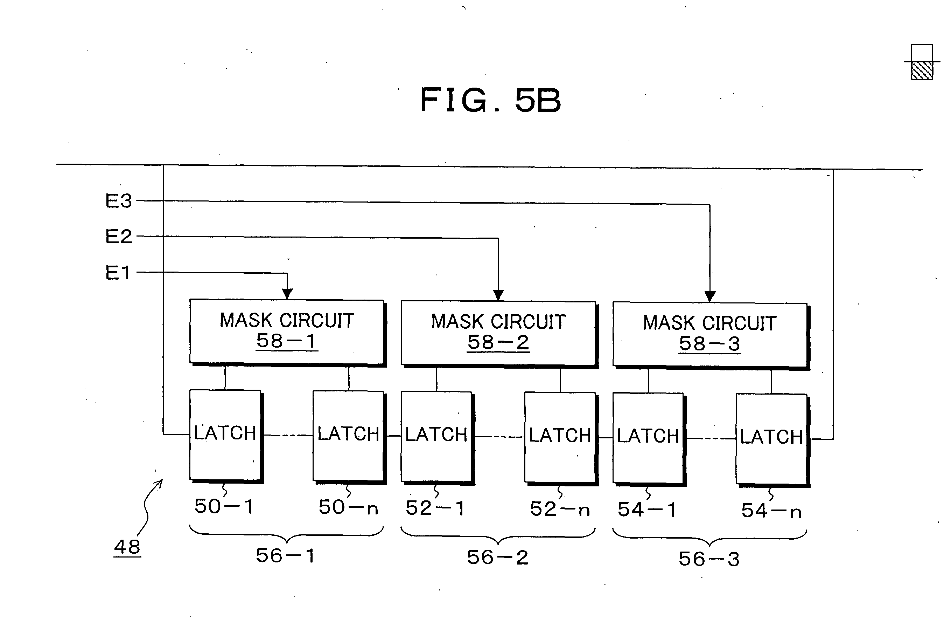

FIGS. 5A and 5B are circuit block diagrams including the error collecting scan chains with the internal circuit 12 having a chip multi processor constitution of FIG. 4 taken as an object.

In FIGS. 5A and 5B, by connecting a plurality of latches provided in the interior of the internal circuit 12 of FIG. 4 into lines of chains in parallel with the command resistor 20 and the bypass resistor 22 corresponding to the JTAG, this embodiment provides three general control scan chains 44-1, 44-2, and 44-3, and furthermore, provides an error collecting scan chain 48.

The command resistor number usable by the user is allotted to the general control scan chains 44-1 to 44-3 and the error collecting scan chain 48, and by setting the command resistor number peculiar to each scan chain to the command resistor 20, the scan chain corresponding to the command resistor number designated by the decoding of the command resistor 20 is selected, thereby performing the scanning-in or the scanning-out.

For example, assuming that there exist command resistor numbers IR01 to IR04 as the command resistor number usable by the user, the command resistor numbers IR01 to IR03 are allotted to the general control scan chains 44-1 to 44-3, respectively, and, the command resistor number IR04 is allotted to the error collecting scan chain 48.

Each of the general control scan chains 44-1 to 44-3 connects latches, for test or verification purposes, provided in the CPU cores 14-1 and 14-2 of the internal circuit 12 and the secondary cache 16 into a line (chain), thereby constituting a shift resistor.

In the meantime, the error collecting scan chain 48 provides error holding latches 50-1 to 50-n in the CPU core 14-1 of FIG. 4, and provides error holding latches 52-1 to 52-n in the CPU core 14-2, and further, provides error holding latches 54-1 to 54-n in the secondary cache 16, and by connecting all error holding latches 50-1 to 54-n provided in these CPU cores 14-1 and 14-2 and the secondary cache 16 into a line of chains, the error collecting scan chain 48 is constituted.

Hence, the error collecting scan chain 48 is divided into a CPU latch group 56-1 corresponding to the CPU core 14-1, a CPU latch group 56-2 corresponding to the CPU core 14-2, and a secondary cache latch group 56-3 corresponding to the secondary cache 16.

Further, for the error collecting scan chain 48, mask circuits 58-1, 58-2, and 58-3 are provided. For the mask circuits 58-1 to 58-3, core separating signals E1, E2 and E3 are supplied when their respective cores become a degeneration object (i.e. do not function normally). For example, if the CPU core 14-1 of FIG. 4 does not function normally for the test operation after the production of the LSI chip 10 and becomes a degeneration object, the core separation signal E1 becomes effective for the mask circuit 58-1. The mask circuit 58-1 performs a masking process for forcibly releasing the holding of an error bit 1 for the CPU latch group 56-1 constituted by the error holding latches 50-1 to 50-n and fixing it to a normal bit 0.

As a specific example of the masking process for the error holding latches 50-1 to 50-n, the embodiment of the present invention performs either one of the following:
(1) a clock off control and a reset control of the latches, and
(2) a mask control of an error input.

Even in the case of the mask circuit 58-2 for the CPU latch group 56-2 including the error holding latches 52-1 to 52-n provided in correspondence to the CPU core 14-2 of FIG. 4, the core separating signal E2 becomes effective when the CPU core 14-2 becomes a degeneration object, so that the masking process for releasing the error holding function by the error holding latches 52-1 to 52-n is performed.

Further, similarly in the case of the mask circuit 58-3 of the secondary cache group 56-3 including the error holding latches 54-1 to 54-n provided in the second cache 16, the core separating signal E3 becomes effective when the secondary cache 16 becomes degenerated (faulty), so that the masking process for releasing the error holding function by the error holding latches 54-1 to 54-n is performed.

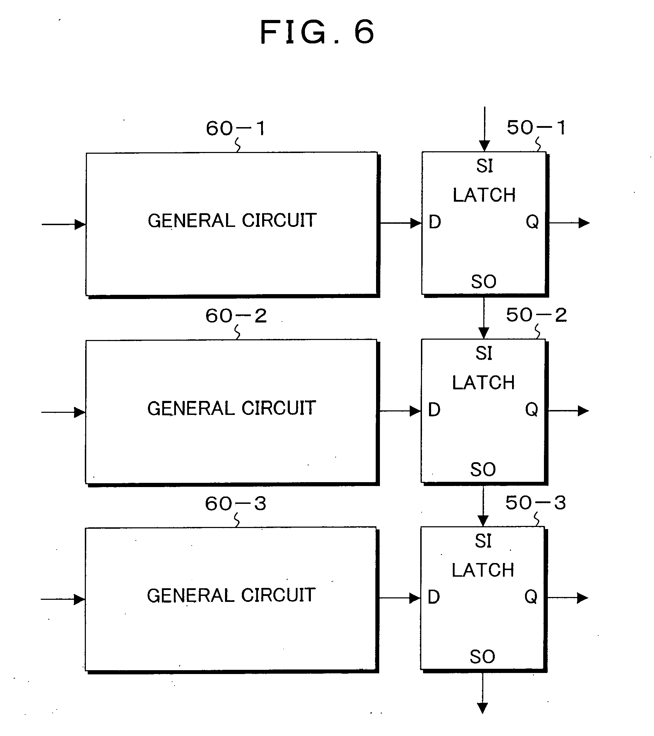

FIG. 6 is an explanatory drawing of the error holding latch in the internal circuit of FIG. 4. In FIG. 6, for example, taking the CPU core 14-1 of FIG. 4 as an example, output stages of general circuits 60-1, 60-2, and 60-3 are provided with the error holding latches 50-1, 50-2, and 50-3.

Each of the error holding latches 50-1 to 50-3 comprises a data input D, a data output Q, a shift input SI, and a shift output SO, and at the normal operation time, a data bit from the general circuit 60-1 is latched as the data input D, and after that, and by synchronizing with a clock, it is outputted to a subsequent circuit as the data output Q.

Assuming that an error occurs during the operation of such general circuits 60-1 to 60-3, the bit information showing an error in the error holding latches 50-1 to 50-3 is latched at a certain timing. In such an error holding state, as shown in FIGS. 5A and 5B, when the command resistor number for realizing the scanning-out of the error collecting scan chain 48 for the command resistor 20 is set and the scanning-out operation is instructed, the error holding latches 50-1 to 50-3 in FIG. 6 separate the data input D and the data output Q, and mutually connect the shift input SI and the shift output SO, so that the shift resistor which becomes a scan chain is constituted, and the error bits held in the error holding latches 50-1 to 50-3 are read to the outside by the scanning-out operation (shift operation), thereby collecting the error information to the host 34 of FIG. 4.

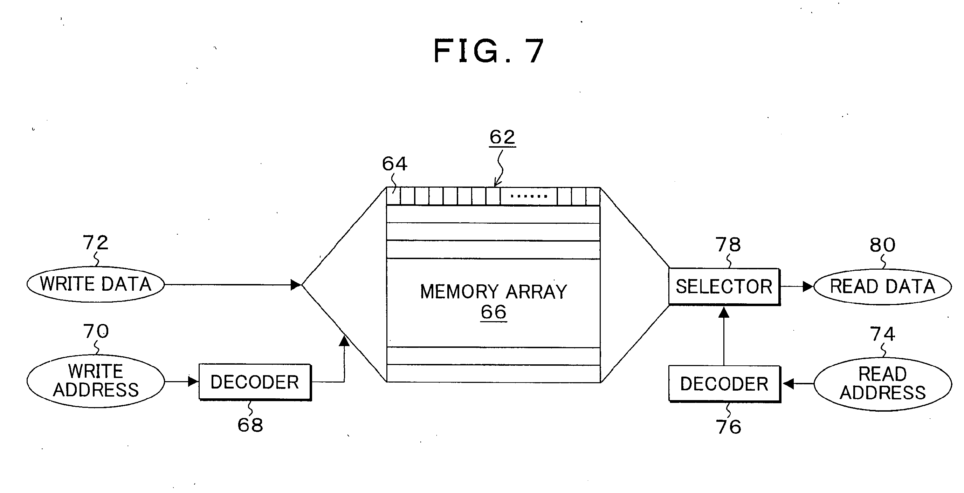

FIG. 7 is an explanatory drawing to show a constitution of a resister file provided as a general circuit in the CPU cores 14-1 and 14-2 of FIG. 4. The resister file 62 is realized by adding a write address decoder circuit 68, a read address decoder circuit 76, and a select circuit 78 to a memory array 66, which is constituted as an array by lining up memory elements 64.

Here, as a memory element 64 used in the resistor file 62, a flip flop of a master slave constitution to mount a scan circuit is usually used. The scan circuit mounted on the memory elements 64 connects the memory elements 64 which constitute the resister file 62 in series in a route different from the normal operation, thereby constituting a shift resister which becomes the scan chain and operates only at a testing time.

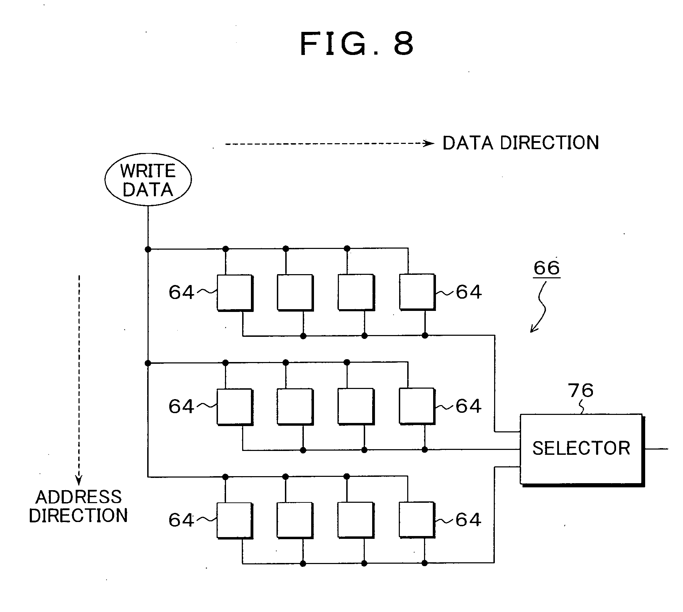

FIG. 8 shows the resister file at the normal time, and to simplify the explanation, takes a case as an example where the memory array 66 is constituted by (address direction) x (data direction)= (3 X 4) = 12 memory elements. The data write for the memory array 66 is performed by selecting four memory elements 64 in a data direction of a specific resister by the decryption of a write address by the write address decoder circuit 68 of FIG. 7 and by writing four bit data in parallel.

Further, a data read from the memory array 66 is performed by selecting by a read selector circuit 78 a read bus collecting read content from four memory elements 64 of a specific resister by decryption of the read address by a read address decoder circuit 76 of FIG. 7, and by reading four bit data in parallel.

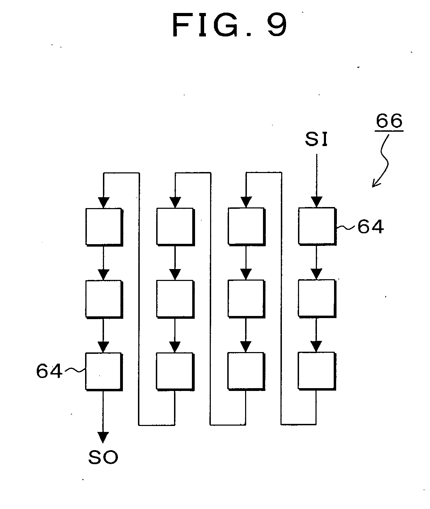

FIG. 9 shows a scan chain as a shift resister which is formed by a scan circuit at the testing time where the flip flop of the master slave constitution is taken as the memory element 64, in which the memory elements 64 of the memory array 66 are connected in series different from the normal operation of FIG. 8, thereby constituting a shift resister.

In the case of the resister file 62, though the error collecting scan chain is constituted by taking all the memories 64 as the error holding latches, as the occasion demands, the error collecting scan chain may be constituted with any of the memory elements taken as the error holding latches.

In this way, by arranging the error holding latches at any given position in the interior of the CPU cores 14-1 and 14-2 and the secondary cache 16, and connecting and constituting a line of chain by connecting in order shift inputs and shift outputs for all the error holding latches at the error detection time, the error collecting scan chain 48 as shown in FIGS. 5A and 5B is constituted, and the error information can be collected by the scanning-out. Further, the total number of error holding latches 50-1 to 54-n constituting the error collecting scan chain 48 is included into a piece of chain, for example, having a scale of the several hundreds number of latches.

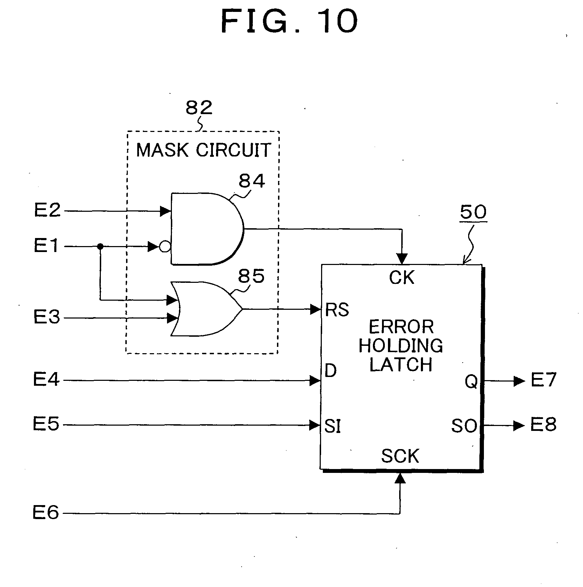

FIG. 10 is a circuit block diagram of an embodiment of the error holding latch and the shift circuit used in the error collecting scan chain of FIGS. 5A and 5B, and this embodiment is characterized in that the latch content is made to always be in a normal pitch 0 by a clock-off control of the error holding latch without holding an error bit 1.

In FIG. 10, the error holding latch 50 comprises a data output Q corresponding to a data input D, and comprises a clock Ck and a reset RS for the latch operation of data. Moreover, the error holding latch 50 comprises a shift input SI and a shift output SO for the scanning-out of the error detection time, and further comprises a shift clock SCK.

In this way, for the error holding latch 50, a mask circuit 82 is provided for a supply line of the clock signal E2 for the clock CK. The mask circuit 82 is constituted by an AND gate 84 and an OR gate 85, with one input side of the AND gate 84 being provided with a clock signal E2, and the other inversing input side provided with a core separating signal E1. Further, one input of the OR gate 85 is provided with a reset signal E3, and the other input of the OR gate 85 is provided with the core separating signal E1.

By providing such a mask circuit 82, when an object core is degenerated, so that the core separating signal E1 becomes a bit [1], the AND gate 84 of the mask circuit 82 is put into a prohibited state, and the supply of the clock signal E2 to the clock input CK of the error holding latch 50 is stopped. At the same time, the core separating signal E1 sets a reset signal for the reset input RS as [1] through the OR gate 85, thereby resetting the error holding latch 50.

By such a clock off control and a reset control, even when an error input signal (error bit [1]) E4 is given to a data input terminal D for the error holding latch 50, the error input signal E4 is not latched by the error holding latch 50, and the latch content is fixed to a normal bit [0] on a steady base.

Hence, the data input D and the data output Q are separated so as to be converted into a shift input SI and a shift output SO, and a holding bit of the error holding latch 50, which is read by the scanning-out operation performed by the supply of the shift clock input by the shift clock signal E6, is a normal bit [0], and can be prevented from being scanned out as an error bit [1]. In the embodiment of FIG. 10, though the reset signal is forcibly made effective by the core separating signal E1 by the OR gate 85 of the mask circuit 82, in addition, the reset signal E3 may be turned into a bit [1] by synchronizing with the input of the core separating signal.

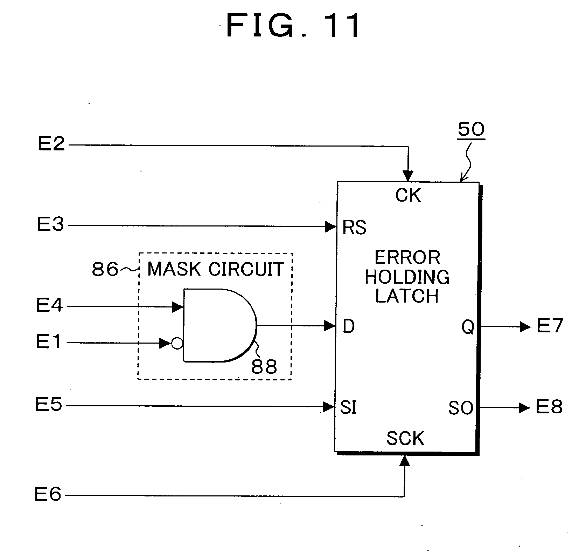

FIG. 11 is a circuit block diagram of another embodiment of the error holding resister and the shift circuit used for the error collecting scan chain of FIGS. 5A and 5B, and this embodiment is characterized in that an error signal inputted to the error holding latch is directly masked.

In FIG. 11, a line for the data input D, in which the error signal E4 for the error holding latch 50 is inputted, is provided with a mask circuit 86. The mask circuit 86 is constituted by an AND gate 88, and one input of the AND gate is supplied with the error signal E4, and the other inversing input is supplied with the core separating signal E1.

By providing such a mask circuit 86, when the core separating signal E1 becomes a bit [1] due to degeneration of the core, and the AND gate 88 becomes a bit [0] by its inversing input and is put into a prohibited state, and the input of the error signal E4 to the error holding latch 50 is prohibited, and as a result, at the scanning out time in which the data input D and the data output Q in the error holding latch 50 are separated so as to be converted into the shift input SI and the shift output SO, a normal bit [0] is scanned out from the error holding latch 50 on a steady base.

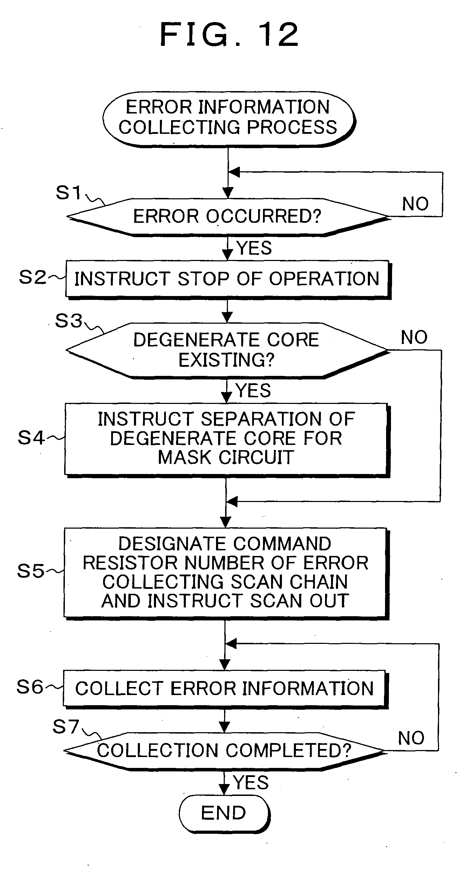

FIG. 12 is a flowchart of the error information collecting process by the host 34 of FIG. 4. In FIG. 12, an error collecting unit 38 provided in the host 34 monitors an error occurrence at step S1. This monitoring of the error occurrence may be performed either during the test operation by a test processing unit 36 or during the operation of an LSI chip 10.

When the error occurrence is determined at step S1, the process advances to step S2 and instructs stopping of the operation of an internal circuit 12, and fixes a state of the error occurrence time. Subsequently, at step S3, whether or not a degenerated core exists on the internal circuit 12 of the LSI chip 10 is checked. In case a degenerated core exists, at step S4, an instruction to separate the degenerated core is issued to any one of the mask circuits 58-1 to 58-3, to make the core a degeneration object provided by corresponding to the error collecting scan chain 48 shown in FIGS. 5A and 5B.

In this way, any one of the separating signals E1 to E3 becomes effective, and the masking process of the error holding latch in the core which becomes the degeneration object of any one of CPU latch groups 56-1 and 56-2 or a scan cache group 56-3 is performed. In the meantime, at step S3, in case no degenerated core exists, the process at step S4 is skipped.

Next, at step S5, the command resister number of the error collecting scan chain 48 is designated, and the scanning-out thereof is instructed. This command resister number is transmitted to the command resister 20 of FIGS. 5A and 5B and decoded, and based on the decoded result, the error collecting scan chain 48 is selected, thereby performing the scanning-out operation. At this time, when a separating instruction to the mask circuit corresponding to the degenerated core is issued at step s4, the latch content of the error holding latch corresponding to the degenerated core is fixed to a normal bit [0], and the error information at the scanning-out time shows that all latches of the degenerated portion are normal, which are excluded from the error object at the error data collecting step.

Subsequently, at step S6, collection of the error information obtained by scanning-out is performed, and at step S7, the completion of the collection is determined, and the series of processes are completed. After the completion of this error information collecting process, the collected error information is delivered to the error information analyzing unit 40 provided in the host 34 of Fig. 4, and an error bit is extracted from the error information, and with reference to the error analyzing data base 42, a cause of the furthest upstream source of the error occurrence is sought out, thereby performing an adequate automatic degeneration or issuing part replacement instruction.

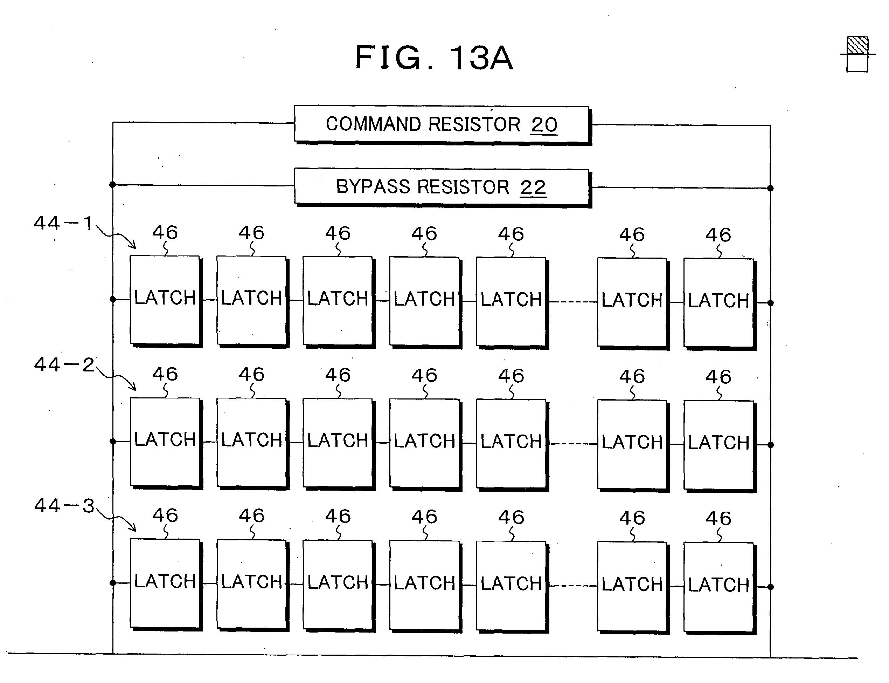

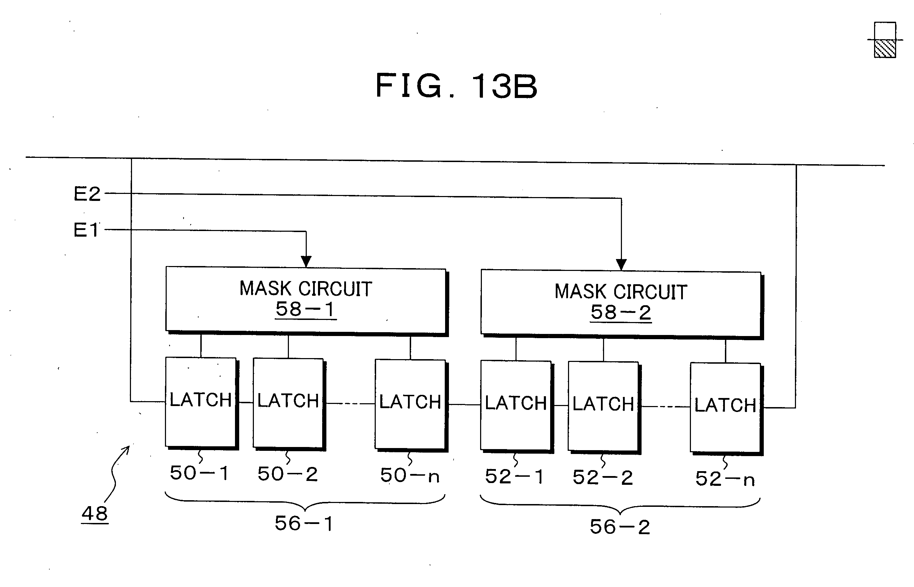

FIGS. 13A and 13B are circuit block diagrams of another embodiment of the present invention constituting the error collecting scan chain corresponding to two CPU cores 14-1 and 14-2 of FIG. 4. In FIGS. 13A and 13B, though the command resistor 20, a bypass resistor 22 and general control scan chains 44-1 to 44-3 are the same as those of the embodiment of FIGS. 5A and 5B, as the error collecting scan chain 48, the present embodiment connects the error holding latches 50-1 to 50-n of the CPU latch group 56-1 corresponding to the CPU core 14-1 and the error holding latches 52-1 to 52-n of the CPU latch group 56-2 corresponding to the CPU core 14-2 into a piece of chain, to constitute the error collecting scan chain.

In this case also, mask circuits 58-1 and 58-2 are provided in correspondence to the CPU latch groups 56-1 and 56-2, and by making either of the core separating signals E1 and E2 for the cores, depending on which becomes degenerate, effective, a mask process is performed for fixing and holding a normal bit [0] on a steady base without allowing the error holding latch, which becomes the degeneration object, to hold an error bit [1]. A specific constitution of these mask circuits 58-1 and 58-2 takes either one of those illustrated in FIGS. 9 and 10.

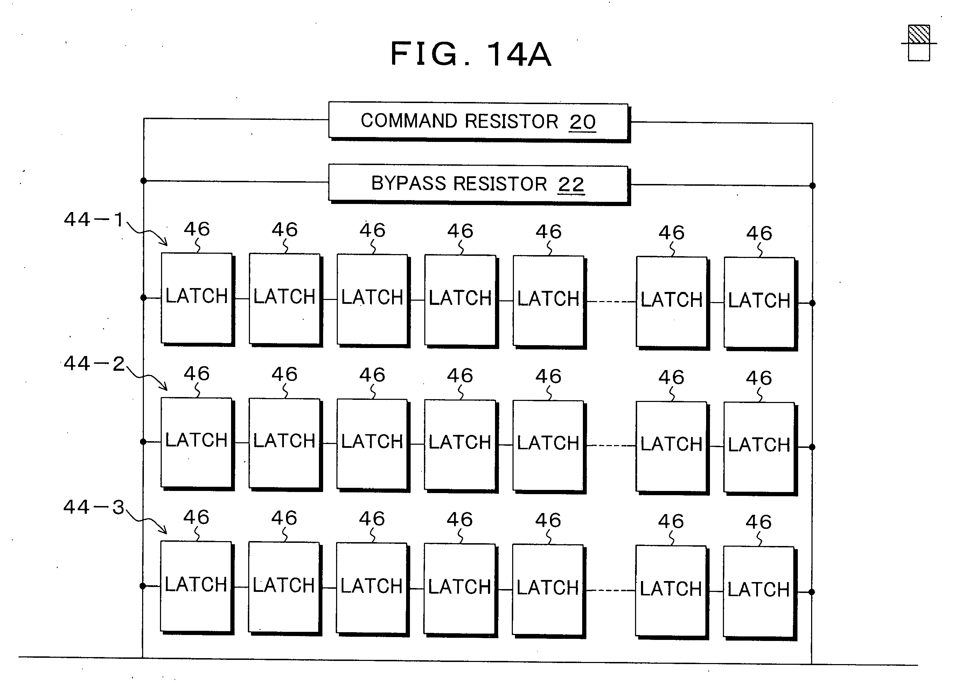

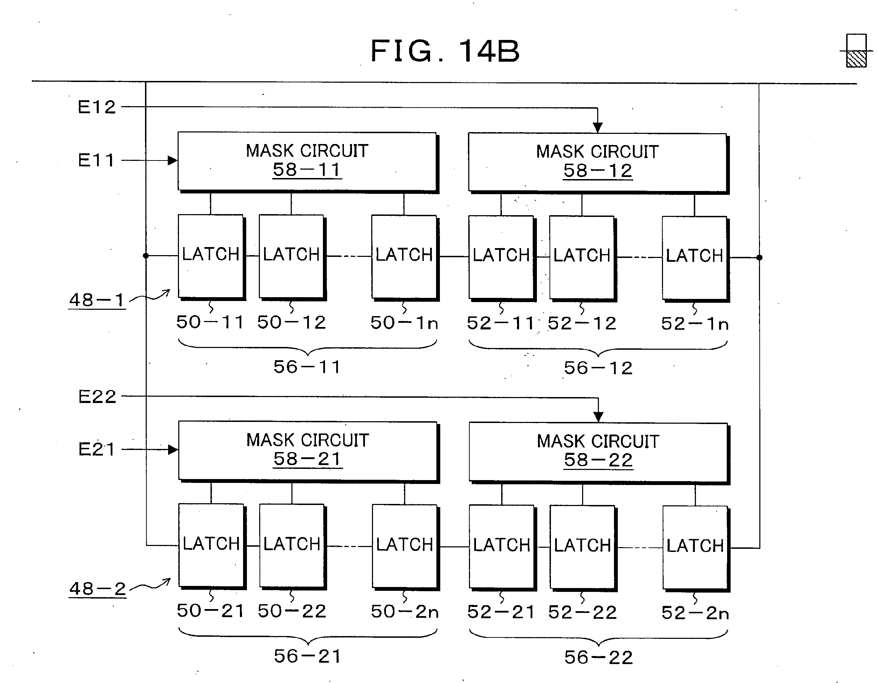

FIGS. 14A and 14B are circuit block diagrams of another embodiment of the present invention in which error collecting scan chain of the CPU cores is divided into error levels. In FIGS. 14A and 14B, though the constitutions of the command resister 20, the bypass resistor 22 and the general control scan chains 44-1 to 44-3 are the same as those of the embodiment of FIGS. 5A and 5B, this embodiment constitutes a scan chain by dividing the error collecting scan chain into a high level error collecting scan chain 48-1 and a low level error collecting scan chain 48-2.

The high level error collecting scan chain 48-1 is provided with latches 50-11 to 50-1n as a CPU latch group 56-11 corresponding to the CPU core 14-1 of FIG. 4, and is also provided with error holding latches 52-11 to 52-1n as a CPU latch group 56-12 corresponding to the CPU core 14-2. The CPU latch groups 56-11 and 56-12 each are provided with mask circuits 58-11 and 58-12, which are provided with core separating signals E11 and E12 corresponding to the core degeneration.

In this respect, the same holds true basically with the low level error collecting scan chain 48-2, which is provided with CPU latch groups 56-21 and 56-22 corresponding to the CPU cores 14-1 and 14-2, and further is provided with mask circuits 58-21 and 58-22 in correspondence to the CPU latch groups 56-21 and 56-22, which are provided with the core separating signals E21 and E22, respectively, when their respective cores become degenerate. Latch groups 56-21 and 56-22 comprise latches 50-21 to 50-2n and 52-21 to 52-2n, respectively.

In the embodiment of FIGS. 14A and 14B, the scan chain is constituted by being divided into a high level error chain and a low level error chain, so that the scanning-out of the scan chain at the error occurrence time is performed separately for the high level error collecting scan chain 48-1 and the low level error collecting scan chain 48-2, and the content of the error is classified as high and low depending on the scan chain at the error collecting stage, thereby performing the error analyzing process more effectively in the error information analyzing unit 40 in the host 34 of FIG. 4.

Further, in the embodiment of FIGS. 14A and 14B, though a case is taken as an example, where the scan chain is constituted by dividing the error collecting scan chain into two portions: a high level error and a low level error, the number of levels may be further divided into three or more levels, so that each level may constitute its peculiar scan chain so as to be scanned out.

Further, the embodiment which constitutes an error collecting scan chain corresponding to the error levels of FIGS. 14A and 14B may constitute a scan chain divided into a low level and a high level for the error collecting scan chain 48 added with the error holding latches 54-1 to 54-n of the secondary cache 12 in addition to the CPU cores 14-1 and 14-2 shown in FIGS. 5A and 5B.

Further, the present invention provides a program for collecting error information by driving the error collecting scan chain with the mount circuit of the JTAG of the LSI chip 10 as an object by the host 34 of FIG. 4, and this program executes the procedure shown in the flowchart of FIG. 12.

The present invention includes suitable modifications, and moreover, is not limited by the numerical values shown by the above described embodiments.

## Claims

1. A multi processor comprising:
a plurality of CPU cores formed on a chip;
a scan chain circuit connecting and constituting a plurality of error holding latches built in the plurality of CPU cores into a line of scan chain;
a plurality of mask circuits for dividing the interior of the scan chain into the error holding latch groups corresponding to the plurality of CPU cores, and allowing the latch content of the error holding latch group corresponding to the degenerated CPU core in the interior of the plurality of CPU cores to be masked; and
a scan control circuit allowing error information to be outputted and collected by scanning out the scan chain circuit at the error occurrence time.

2. The processor according to claim 1, wherein the scan control circuit allows error information to be scanned out based on the designation of the scan chain by a command resister.

3. The processor according to claim 1, further forming a secondary cache on the chip,
wherein the scan chain circuit connects and constitutes a plurality of error holding latches built in the plurality of CPU cores and the secondary cache into a line of scan chain at the error analyzing time, and
wherein the plurality of mask circuits are provided for every error holding latch group corresponding to the plurality of CPU cores and the secondary cache of the interior of the scan chain, and the latch content of the error holding latch group corresponding to the degenerated portion of the interior of the plurality of CPU cores or the secondary cache is allowed to be masked.

4. The processor according to claim 1, wherein the scan chain circuit divides a plurality of error holding latches built in the plurality of CPU cores for every error level, and connects and constitutes them into a line of scan chain, and
wherein the plurality of mask circuits are provided for every error holding latch group corresponding to the plurality of CPU cores in the interior of the scan chain which is divided into the error levels and connected and constituted, and the latch content of the error holding latch group of each error level corresponding to the degenerated CPU core in the interior of the plurality of CPU cores is allowed to be masked.

5. The processor according to claim 1, wherein the plurality of error holding latches are divided into a high level error and a low level error, and the scan chain circuit and the mask circuit are provided for every two error levels.

6. The processor according to claim 1, wherein the error holding latch comprises: a data input terminal, a reset input terminal, a clock terminal, a data output terminal, a shift input terminal, a shift output terminal, and a shift clock terminal,
wherein the mask circuit prohibits a clock input for the clock terminal by the input of a core separating signal, and at the same time, the latch content is masked by fix-inputting a reset signal to the reset terminal.

7. The processor according to claim 1, wherein the error holding latch comprises: a data input terminal, a reset input terminal, a clock terminal, a data output terminal, a shift input terminal, a shift output terminal, and a shift clock terminal,
wherein the mask circuit prohibits a data input to the data input terminal by the input of a core separating signal so as to mask the latch content.

8. An error analytical method of the processor forming a plurality of CPU cores on a chip, comprising:
a scan chain constituting step of connecting and
constituting a plurality of error holding latches built in the plurality of CPU cores into a line of scan chain;
a masking step of dividing the interior of the scan chain into the error holding latch groups corresponding to the plurality of CPU cores and masking the latch content of the error holding latch group corresponding to the degenerated CPU core in the interior of the plurality of CPU cores; and
an error information collecting step of collecting error information by scanning out the scan chain at the error occurrence time.

9. The error analytical method of the processor according to claim 8, wherein the error information collecting step scans out error information based on the designation of the scan chain by a command resistor.

10. The error analytical method of the processor according to claim 8, further forming a secondary cache on the chip,
wherein the scan chain constituting step connects and constitutes the plurality of error holding latches built in the plurality of CPU cores and the secondary cache into a line of scan chain at the error analyzing time, and
wherein the masking step allows the latch content of the error holding latch group corresponding to the degenerated portion of the interior of the plurality of CPU cores and the secondary cache to be masked for every error holding latch group corresponding to the plurality of CPU cores and the secondary cache of the interior of the scan chain.

11. The error analytical method of the processor according to claim 8, wherein the scan chain constituting step divides the plurality of error holding latches built in the plurality of CPU cores for every error level at the error information collecting time, and connects and constitutes them into a line of scan chain, and
wherein the masking step allows the latch content of the error holding latch group of each error level corresponding to the degenerated CPU core in the interior of the plurality of CPU cores to be masked for every error holding latch group corresponding to the plurality of CPU cores of the interior of the scan chain divided into error levels and connected and constituted.

12. The error analytical method of the processor according to claim 8, wherein the plurality of error holding latches are divided into a high level error and a low level error, and the scan chain constituting step, the masking step, and the error information collecting step are performed for every two error levels.

13. The error analytical method of the processor according to claim 8, wherein the error holding latch comprises: a data input terminal, a reset input terminal, a clock terminal, a data output terminal, a shift input terminal, a shift output terminal, and a shift clock terminal, and
wherein the masking step prohibits a clock input for the clock terminal by the input of a core separating signal, and at the same time, masks the latch content by fix-inputting a reset signal to the reset terminal.

14. The error analytical method of the processor according to claim 8, wherein the error holding latch comprises: a data input terminal, a reset input terminal, a clock terminal, a data output terminal, a shift input terminal, a shift output terminal, and a shift clock terminal, and
wherein the masking step prohibits a data input for the data input terminal by the input of a core separating signal, and masks the latch content.

15. A program, allowing a computer on a test access circuit provided on a processor forming a plurality of CPU cores on a chip to execute;
a scan chain constituting step of connecting and constituting a plurality of error holding latches built in the plurality of CPU cores into a line of scan chain;
a masking step of dividing the interior of the scan chain into the error holding latch groups corresponding to the plurality of CPU cores, and allowing the latch content of the error holding latch group corresponding to the degenerated core in the interior of the plurality of CPU cores to be masked; and
an error information collecting step of collecting error information by scanning out the scan chain at the error occurrence time.

16. The program according to claim 15, wherein the error information collecting step scans out the error information based on the designation of the scan chain by an error information collecting command resistor.

17. The program according to claim 15, further forming a secondary cache on the chip,
wherein the scan chain constituting step connects and constitutes a plurality of error holding latches built in the plurality of CPU cores and the secondary chain into a line of scan chain at the error analyzing time, and
wherein the masking step masks the latch conetent of the error holding latch group corresponding to the degenerated portion in the interior of the plurality of CPU cores or the secondary cache for every error holding latch group corresponding to the plurality of CPU cores and the secondary cache in the interior of the scan chain.

18. The program according to claim 15, wherein the scan chain constituting step divides a plurality of error holding latches built in the plurality of CPU cores for every error level, and connects and constitutes them into a line of scan chain,
wherein the masking steps allows the latch content of the error holding latch group of each error level corresponding to a degenerated CPU core in the interior of the plurality of CPU cores to be masked for every error holding latch group corresponding to the plurality of CPU cores in the interior of the scan chain which is divided into the error level and connected and constituted.

19. The program according to claim 15, wherein the plurality of error holding latches are divided into a high level error and low level error, and the scan chain constituting step, the masking step, and the error information collecting step are executed for every two error levels.

20. The program according to claim 15, wherein the error holding latch comprises: a data input terminal, a reset input terminal, a clock terminal, a data output terminal, a shift input terminal, a shift output terminal, and a shift clock terminal,
wherein the masking step prohibits a clock input for the clock terminal by the input of a core separating signal, and at the same time, allows the latch content to be masked by fix-inputting a reset signal to the rest terminal.

21. The program according to claim 15, wherein the error holding latch comprises: a data input terminal, a reset input terminal, a clock terminal, a data output terminal, a shift input terminal, a shift output terminal, and a shift clock terminal,
wherein the masking step prohibits a data input for the data input terminal by the input of a core separating signal, and at the same time, allows the latch content to be masked.
